# EUROPEAN PATENT APPLICATION

(11) **EP 4 831 027 A1**
(43) Date of publication of application: **28.10.2026**
(21) Application number: 26173949.4
(22) Date of filing: 22.04.2026
(51) Int. Cl.: B60W 30/18, B60K 35/81

(54) **INFORMATION PROCESSING APPARATUS**

(30) Priority: 24.04.2025 JP 2025072674
(71) Applicant: Toyota Jidosha Kabushiki Kaisha, Toyota-shi, Aichi-ken 471-8571 (JP)
(72) Inventor: KONISHI, Shogo, TOYOTA-SHI, AICHI-KEN, 471-8571 (JP); HATTORI, Tsutomu, TOYOTA-SHI, AICHI-KEN, 471-8571 (JP); TAKADA, Arata, TOYOTA-SHI, AICHI-KEN, 471-8571 (JP); NISHIDA, Takashi, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

An information processing apparatus (20) includes a controller (21B) configured to display, based on a traveling lane of a host vehicle (10), a surrounding object (40A) of a surrounding vehicle recognized by the host vehicle (10) together with an image (10A) of the host vehicle and an image (30A) indicating the traveling lane, on a display unit (44). The controller (21B) is configured to fix, when a difference between a lateral position coordinate of the surrounding object (40A) before a lane change and a lateral position coordinate of the surrounding object (40A) after the lane change is changed to be equal to or larger than a predetermined threshold value, due to switching of the traveling lane of the host vehicle (10), display of the surrounding object (40A) at a fixed position corresponding to the lateral position coordinate before the lane change, and continue the display of the surrounding object (40A) at the fixed position until a release condition related to the fixing is satisfied.

## Description

### BACKGROUND OF THE INVENTION

### 1. Field of the Invention

The present disclosure relates to an information processing apparatus.

### 2. Description of Related Art

Japanese Patent No. 7048398 (JP 7048398 B) discloses a vehicle control device that can perform autonomous driving that provides a sense of security to a passenger. In JP 7048398 B, in a technology according to JP 7048398 B, an image indicating a host vehicle, an image indicating a surrounding situation of the host vehicle, and the like are displayed on a display unit.

### SUMMARY OF THE INVENTION

In the related art, when an object of a surrounding vehicle is displayed on the display unit, a display mode when a traveling lane of the host vehicle is switched is not considered. Therefore, a display deviation of the object occurs when the traveling lane of the host vehicle is switched, and display of smooth switching cannot be represented.

An object of the present disclosure is to provide an information processing apparatus that can reduce a sense of discomfort in display switching during a lane change.

An information processing apparatus according to a first aspect includes a controller configured to display, based on a traveling lane of a host vehicle, a surrounding object of a surrounding vehicle recognized by the host vehicle together with an image of the host vehicle and an image indicating the traveling lane, on a display unit, in which the controller is configured to fix, when a difference between a lateral position coordinate of the surrounding object relative to the host vehicle before a lane change and a lateral position coordinate of the surrounding object relative to the host vehicle after the lane change is changed to be equal to or larger than a predetermined threshold value, due to switching of the traveling lane of the host vehicle, display of the surrounding object at a fixed position corresponding to the lateral position coordinate before the lane change, and continue the display of the surrounding object at the fixed position until a release condition related to the fixing is satisfied.

In the information processing apparatus according to the first aspect, a display mode is adopted in which the surrounding object during the lane change is displayed at the fixed position. As a result, a sense of discomfort in the display switching during the lane change can be reduced.

With the information processing apparatus according to a second aspect, in the information processing apparatus according to the first aspect, the release condition includes a condition related to a positional relationship of a lateral position coordinate of the surrounding object and a condition related to a duration for maintaining the fixed position, and the controller is configured to release, when the condition related to the positional relationship or the condition related to the duration is satisfied, the fixing of the display of the surrounding object. With the information processing apparatus according to the second aspect, occurrence of a deviation at the time of the display switching can be suppressed by considering the positional relationship and the duration.

With the information processing apparatus according to a third aspect, in the information processing apparatus according to the second aspect, when the surrounding object travels on the traveling lane serving as a switching destination, the controller is configured to set the condition related to the positional relationship in the release condition as a case where the lateral position coordinate of the surrounding object is within a predetermined distance from a center line of the host vehicle, release the fixed position when the release condition is satisfied, and display the surrounding object at the lateral position coordinate. With the information processing apparatus according to the third aspect, the occurrence of the deviation at the time of the display switching can be suppressed by considering a case where a relative distance between the surrounding object and the host vehicle is small.

With the information processing apparatus according to a fourth aspect, in the information processing apparatus according to the second aspect, when the surrounding object travels on the traveling lane serving as a switching destination, the controller is configured to set the condition related to the positional relationship in the release condition as a case where a difference between the lateral position coordinate of the surrounding object that is detected and the fixed position is within a value corresponding to the threshold value, release the fixed position when the release condition is satisfied, and display the surrounding object at the lateral position coordinate. With the information processing apparatus according to the fourth aspect, the occurrence of the deviation at the time of the display switching can be suppressed by considering the relationship between the surrounding object and the fixed position.

With the information processing apparatus according to a fifth aspect, in the information processing apparatus according to the second aspect, the controller is configured to change the condition related to the duration in the release condition in accordance with traveling states of the host vehicle and the surrounding vehicle. With the information processing apparatus according to the fifth aspect, a sense of discomfort in the object display during the lane change can be reduced.

According to the technology of the present disclosure, a sense of discomfort in the display switching during the lane change can be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a hardware configuration of a vehicle;
FIG. 2 is a display example for describing a surrounding situation display of a host vehicle;
FIG. 3 is a diagram for describing a display synchronization deviation of a surrounding object during a lane change;
FIG. 4 is a schematic diagram for describing a positional relationship of a lateral position coordinate in a fixing condition and a release condition;
FIG. 5 is a flowchart showing a flow of specific processing executed by a meter electronic control unit (ECU); and
FIG. 6 is a diagram showing an example of display control at a fixed position.

### DETAILED DESCRIPTION OF EMBODIMENTS

Hereinafter, a vehicle 10 according to a present embodiment will be described.

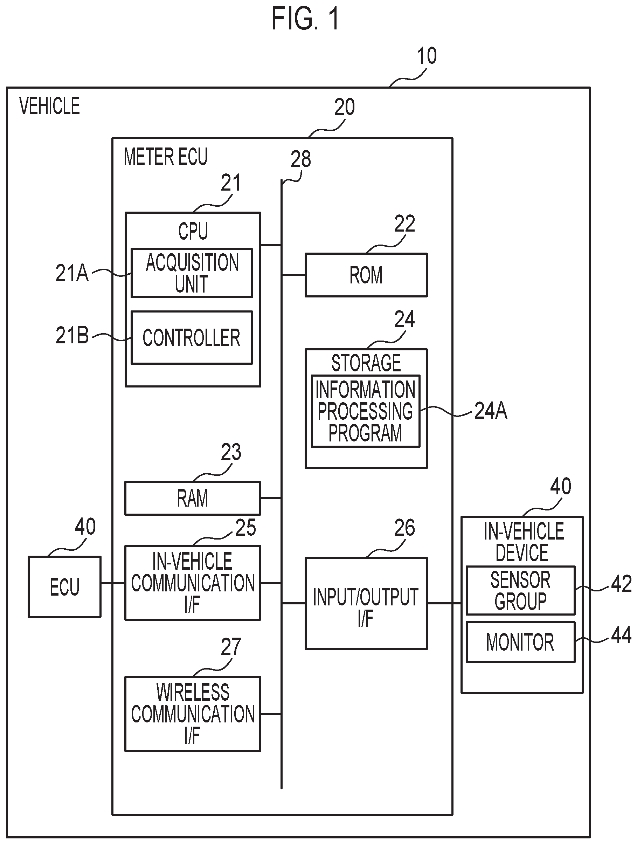

FIG. 1 is a block diagram showing a hardware configuration of the vehicle 10. As shown in FIG. 1, the vehicle 10 includes a meter electronic control unit (ECU) 20. The vehicle 10 is an example of a "vehicle" in the present disclosure, and the meter ECU 20 is an example of an "information processing apparatus" in the present disclosure.

The meter ECU 20 is configured to include a central processing unit (CPU) 21, a read only memory (ROM) 22, a random access memory (RAM) 23, a storage 24, an in-vehicle communication interface (I/F) 25, an input/output I/F 26, and a wireless communication I/F 27. Each of these components is connected to be able to communicate with each other via an internal bus 28.

The CPU 21 is a central processing unit, and executes various programs or controls each unit. That is, the CPU 21 reads a program from the ROM 22 or the storage 24, and executes the program using the RAM 23 as a work area. The CPU 21 controls each of the components and performs various arithmetic processes according to the program recorded in the ROM 22 or the storage 24.

The ROM 22 stores various programs and various types of data. The RAM 23 temporarily stores a program or data, as a work area.

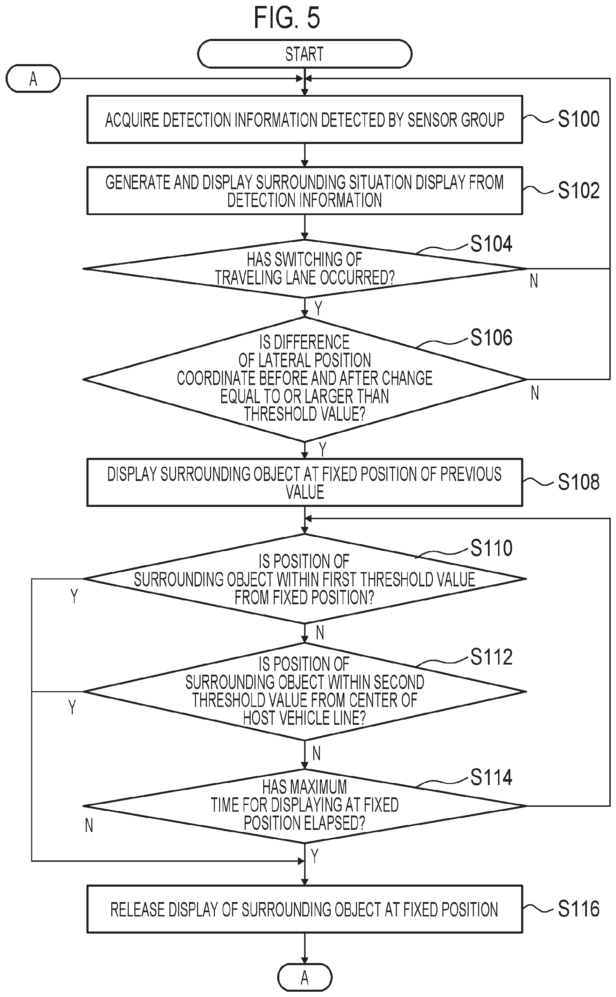

The storage 24 is configured by a storage medium such as an embedded multimedia card (eMMC) or universal flash storage (UFS), and stores various programs and various types of data. An information processing program 24A is stored in the storage 24. The information processing program 24A is a program for causing the CPU 21 to execute specific processing (see FIG. 5) described below.

The in-vehicle communication I/F 25 is an interface for connecting to another ECU 30, and a communication standard based on a controller area network (CAN) protocol is used. The in-vehicle communication I/F 25 is connected to an external bus 29. Although not shown in drawings, an ECU is not limited to the ECU 30, and a plurality of ECUs is provided according to various functions in the vehicle 10.

The input/output I/F 26 is an interface for communicating with an in-vehicle device 40 mounted in the vehicle 10.

The in-vehicle device 40 represents various devices mounted in the vehicle 10. The vehicle 10 includes a sensor group 42 and a monitor 44 as an example of the in-vehicle device 40.

The sensor group 42 is configured to include various sensors and imaging means for detecting a state of the vehicle 10 and a surrounding situation of the vehicle 10. Specifically, the sensor group 42 includes, for example, various sensors such as a three-dimensional light detection and ranging (3D-LiDAR) sensor, a millimeter wave sensor, an infrared sensor, a blinker sensor, an accelerator position sensor, a vehicle speed sensor, a steering angle sensor, an angular velocity sensor, a global positioning system (GPS) sensor, an illuminance sensor, a gyro sensor, a steering angle sensor, and an acceleration sensor, and a plurality of cameras that captures an image of a periphery of the vehicle 10. The sensor group 42 outputs a detection result of each sensor and a captured image obtained by each camera to a predetermined electronic control unit such as the meter ECU 20 and the ECU 30.

The monitor 44 is a meter display that is provided on a meter panel disposed forward of a driver's seat of the vehicle 10 and displays an image or the like related to a proposal of an operation related to a function of the vehicle 10 and a description of the function. The monitor 44 is an example of a "display unit" in the present disclosure.

The wireless communication I/F 27 is a wireless communication module for communicating with an external device. For example, a communication standard such as fifth generation (5G), long term evolution (LTE), Wi-Fi (registered trademark), and Bluetooth (registered trademark) is used in the wireless communication module.

In addition, the CPU 21 of the meter ECU 20 includes an acquisition unit 21A and a controller 21B as a functional configuration. Each functional configuration is implemented by the CPU 21 reading out and executing the information processing program 24A stored in the storage 24.

The acquisition unit 21A acquires various types of information that can be acquired in the vehicle 10. Specifically, the acquisition unit 21A acquires detection information such as a detection result obtained by various sensors constituting the sensor group 42 and the captured image obtained by each camera as the various types of information. Here, in the present embodiment, the sensor group 42 detects the position of the vehicle 10 (host vehicle) and the position of a surrounding vehicle recognized by the host vehicle. In addition, in the present embodiment, the sensor group 42 detects a traveling lane of the host vehicle and detects switching of the traveling lane.

The controller 21B performs display control related to the display of the monitor 44. For example, the controller 21B displays a surrounding situation display 100 indicating the surrounding situation of the vehicle 10 as seen from a virtual viewpoint on the monitor 44 as the display control based on the detection information acquired by the acquisition unit 21A. As the surrounding situation display 100, a host vehicle object 10A indicating the vehicle 10 (host vehicle), a traveling lane display 30A displayed based on the host vehicle, a surrounding object 40A indicating the surrounding vehicle recognized by the host vehicle, and the like are displayed on the monitor 44. The host vehicle object 10A is an image indicating the host vehicle, the surrounding object 40A is an image indicating the surrounding vehicle, and the traveling lane display 30A is an image indicating the traveling lanes and lane markings. The host vehicle object 10A is an example of an image of the host vehicle in the present disclosure, and the traveling lane display 30A is an example of an image indicating the traveling lane in the present disclosure.

Here, the "virtual viewpoint" is a viewpoint set on a three-dimensional virtual space with the position of the host vehicle object 10A as an origin, and the virtual viewpoint is defined by predetermined viewpoint coordinates and a viewpoint angle (orientation) in the virtual space. As an example, the virtual viewpoint is a viewpoint that overlooks the vehicle 10 and a periphery of the vehicle 10 at a specific viewpoint angle from specific viewpoint coordinates located above the host vehicle object 10A in the virtual space. The controller 21B is an example of a "controller" in the present disclosure, and the host vehicle object 10A is an example of a "vehicle display" in the present disclosure.

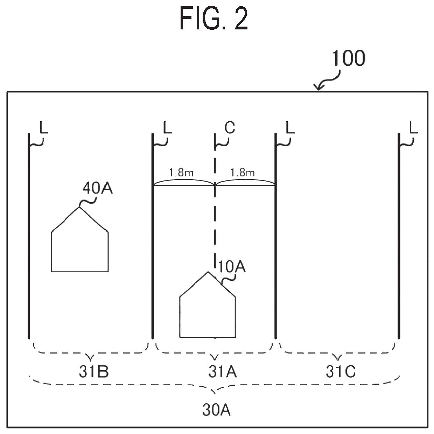

A display example of the monitor 44 will be described. FIG. 2 is a display example for describing a surrounding situation display of the host vehicle. The surrounding situation display is a display of a part of the monitor 44 and is set such that a driver seated in the driver's seat can visually recognize the display through an opening portion of a steering wheel.

A display mode of the traveling lane display 30A in the virtual space will be described with reference to FIG. 2. The traveling lane display 30A is represented by being divided by lane markings (L) indicating white lines, and a host vehicle traveling lane 31A of the host vehicle and adjacent lanes 31B, 31C are represented. Here, it is assumed that the traveling lane display 30A displayed on the virtual space is determined by fixing a road width on the meter, normalizing a difference in the road width, and determining a drawing position of the host vehicle. The normalization is performed, for example, by recognizing the position of the lane marking on both sides and calculating the width of the host vehicle lane. For example, it is assumed that the normalized lane width corresponds to traveling on a road having a standard lane width (3.6 m). Then, a relative position is calculated based on a center line (c) in the normalized lane width, by calculating respective relative distances between the host vehicle and the lane marking on both sides. A host vehicle position (that is, a display position of the host vehicle object 10A) or a display position of the surrounding object 40A is displayed by calculating the relative position from the relative distance based on the center line (c) of the traveling lane of the host vehicle. As described above, the traveling lane display 30A is displayed on the virtual space by the normalized lane width. In this case, the lane change occurs when a behavior occurs in which the host vehicle moves by 1.8 m to the left or right based on the center line (c) of the traveling lane of the host vehicle. Hereinafter, control of the display mode will be described on a premise of the normalized road width.

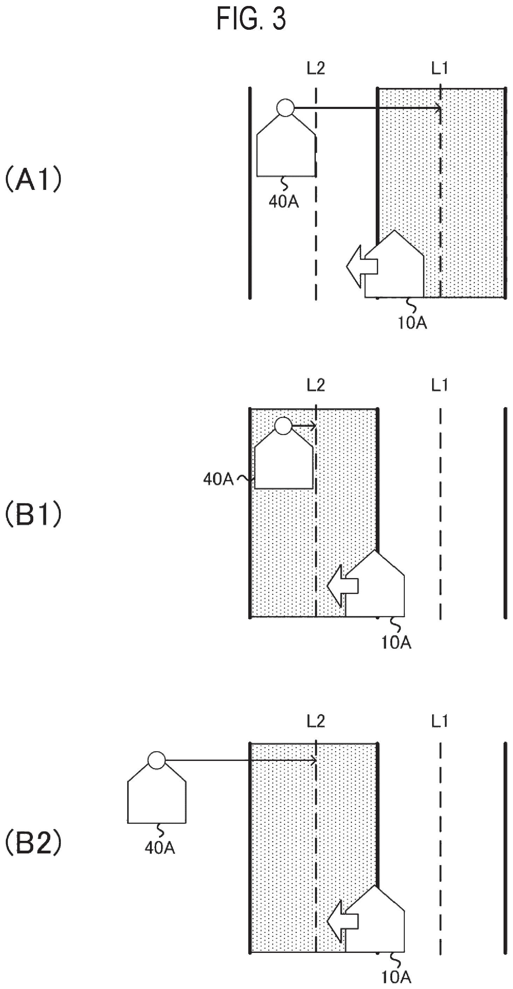

Here, a problem of display switching of the surrounding object 40A when the lane change occurs will be described. FIG. 3 is a diagram for describing a display synchronization deviation of a surrounding object during a lane change. (A1) shows a situation before the lane change, and the host vehicle object 10A is trying to perform the lane change from a lane L1 in which the host vehicle object 10A travels to a left lane L2. In this situation, the relative position of the surrounding object 40A is calculated from a center line of L1. An arrow from the surrounding object 40A to the center line in each scene of (A1), (B1), and (B2) indicates the relative distance. Then, when the host vehicle object 10A performs the lane change to L2, the center line moves to the lane L2 after the lane change, and a reference position also moves, but a synchronization deviation occurs here. (B1) is an example in which it is assumed that the surrounding object is displayed at a correct position. Meanwhile, (B2) is an example in which the surrounding object is displayed at a position at which the synchronization deviation is performed. In (B2), when the surrounding object is recognized, a lane change of the host vehicle is delayed due to the synchronization deviation, and the surrounding object 40A is displayed based on the center line after the lane change while the relative distance from the lane before the lane change is maintained. As a result of the synchronization deviation, a lateral position coordinate at which the surrounding object 40A is displayed is greatly changed, and a situation occurs in which the surrounding object 40A is displayed at a position far from an actual position. The lateral position coordinate is a coordinate value indicating a relative distance on a lateral axis from a center based on the center of the host vehicle itself on the virtual space. That is, the lateral position coordinate is a coordinate value calculated as the relative distance from the host vehicle based on a current position of the host vehicle, after the relative distance from the center line of the traveling lane of the host vehicle is calculated. The reason why such a synchronization deviation occurs is that, when information is output in recognition processing, such as object recognition or path recognition, the information is input as coordinates that are based on the center of the traveling lane of the host vehicle, but is temporarily converted into a relative position from the host vehicle in internal processing or final display processing. For example, when the lateral position coordinate before the lane change in (A1) is 3.4 m, and the correct lateral position coordinate in a case of (B1) is 1.8 m, the lateral position coordinate in a case of the synchronization deviation of (B2) is 5.4 m obtained by adding 3.6 m of one lane to 1.8 m, and a difference of 2.0 m occurs.

Therefore, in the present embodiment, when the lateral position coordinate of the surrounding object is changed to be equal to or larger than a predetermined threshold value by the switching of the traveling lane of the host vehicle, the controller 21B holds a previous value of lateral position information of the surrounding object 40A. By holding the previous value, the display of the surrounding object 40A is fixed, and the display of the surrounding object 40A is maintained at a fixed position until a release condition related to the fixing is satisfied.

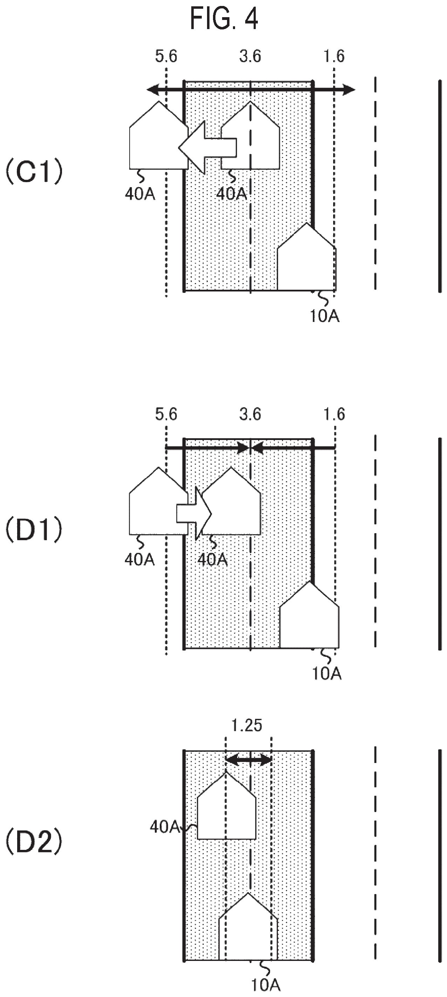

The release condition related to the fixing includes (1) a condition related to a positional relationship of the lateral position coordinate of the surrounding object 40A and (2) a condition related to a duration for maintaining the fixed position. FIG. 4 is a schematic diagram for describing the positional relationship of the lateral position coordinate in a fixing condition and a release condition. As shown in (C1), the fixing condition is set as a case where the lateral position coordinate of the surrounding object 40A is deviated by a predetermined distance or more (2 m or more). In an example, the lateral position coordinate is 3.6 m. In this case, when the deviation is changed to 5.6 m or more or 1.6 m or less, the display of the surrounding object 40A is fixed at the previous value, that is, 3.6 m. The example of the surrounding object 40A in (C1) shows an example in which the surrounding object 40A is deviated to the left by 2 m or more as shown in the surrounding object 40A at a tip of the arrow. As described above, the display is fixed when the difference between the lateral position coordinate of the surrounding object 40A before the change (that is, before the lane change) and the lateral position coordinate of the surrounding object 40A after the change (that is, after the lane change) is changed to be equal to or larger than the predetermined threshold value. The release condition determines whether the position of the surrounding object 40A has returned to the correct position when the surrounding object 40A travels on a traveling lane serving as a switching destination. As shown in (D1), the condition related to the positional relationship of the release condition is set as a case where the position of the surrounding object 40A has returned to a position within ±2.0 m from the fixed position, or as shown in (D2), a case where the position of the surrounding object 40A has come to within ±1.25 m from the center (center line) of the host vehicle lane after the lane change. The reference of (D1) is a reference for determining that a temporary deviation in recognition is resolved and the object has returned to a correct position in an original vehicle lane. The example of the surrounding object 40A in (D1) shows an example in which the deviation is resolved and the surrounding object 40A has returned to a position within 2.0 m from the fixed position as shown in the surrounding object 40A at the tip of the arrow. As in (D1), in the release condition of the present disclosure, a condition is set as a case where the difference between the lateral position coordinate of the surrounding object 40A that is detected and the fixed position is within a value corresponding to the threshold value. The reference of (D2) is a reference for determining that the lane change is completed and the surrounding object 40A is at the correct position in the new host vehicle lane. As in (D2), the release condition of the present disclosure is set as a case where the lateral position coordinate of the surrounding object 40A is within a predetermined distance from the center line of the host vehicle. The center line here is the center line of the traveling lane serving as a lane of switching destination of the host vehicle. In addition, a condition related to the duration is set to 3.0 second as a maximum time for displaying at the fixed position. The numerical value of each condition is not limited to the numerical value described in the example, and may be appropriately set according to the setting of the lane width on the virtual space.

In addition, the controller 21B may change the condition related to the duration in the release condition in accordance with the traveling states of the host vehicle and the surrounding vehicle. For example, the maximum time may be extended (or shortened) when a movement speed of the host vehicle for the lane change is slower (or faster) than a predetermined speed. In addition, the maximum time may be extended (or shortened) when a distance from the host vehicle to the surrounding vehicle is separated by a predetermined distance or more (or is close). By changing the duration according to a necessity of paying attention to the speed of the host vehicle or the surrounding vehicle, a sense of discomfort in the display switching during the lane change is reduced.

FIG. 5 is a flowchart showing a flow of specific processing executed by the meter ECU 20. The CPU 21 reads out the information processing program 24A from the storage 24, loads the information processing program 24A into the RAM 23, and executes the information processing program 24A to perform the specific processing. The specific processing is automatically executed repeatedly at a predetermined time interval as an example.

In step S100, the acquisition unit 21A acquires the detection information detected by the sensor group 42. The detection information includes detection results related to the host vehicle, the surrounding vehicle, and the lane markings of the traveling lane. The detection result is acquired at a predetermined update frequency for subsequent processing and is appropriately updated.

In step S102, the controller 21B generates the surrounding situation display 100 from the detection information, and displays the surrounding situation display 100 on the monitor 44. The surrounding situation display 100 includes the traveling lane display 30A, the host vehicle object 10A, and the surrounding object 40A.

In step S104, the controller 21B determines whether the switching of the traveling lane has occurred. When the switching of the traveling lane has occurred, the process proceeds to step S106, and when the switching of the traveling lane has not occurred, the present processing step is repeated.

In step S106, the controller 21B determines, regarding the lateral position coordinate of the surrounding object 40A, whether the difference between the lateral position coordinate before the change and the lateral position coordinate after the change is equal to or larger than the threshold value. When the difference is equal to or larger than the threshold value, the process proceeds to step S108, and when the difference is not equal to or larger than the threshold value, the process returns to step S100 to continue the processing of generating the surrounding situation display 100.

In step S108, the controller 21B holds the previous value of the lateral position information of the surrounding object 40A, and displays the surrounding object 40A at the fixed position of the previous value. Determination processing of steps S110 to S114 after step S108 may be executed in parallel regardless of the order.

In step S110, the controller 21B determines whether the position of the surrounding object 40A is within a predetermined first threshold value (within ±2.0 m) from the fixed position. When the position is within the predetermined first threshold value, the process proceeds to step S116, and when the position is not within the predetermined first threshold value, the process proceeds to step S112.

In step S112, the controller 21B determines whether the position of the surrounding object 40A is within a predetermined second threshold value (within ±1.25 m) from the center (center line) of the host vehicle lane after the lane change. When the position is within the predetermined second threshold value, the process proceeds to step S116, and when the position is not within the predetermined second threshold value, the process proceeds to step S114.

In step S114, the controller 21B determines whether the maximum time for displaying at the fixed position has elapsed. When the maximum time has elapsed, the process proceeds to step S116, and when the maximum time has not elapsed, the process returns to step S110 to repeat the determination.

In step S116, the controller 21B releases the display of the surrounding object 40A at the fixed position, ends the display processing of the fixed position, and returns to step S100 to continue the display control. By ending the display at the fixed position, the surrounding object 40A is displayed at the lateral position coordinate of the surrounding object 40A at the time of the processing of the present step.

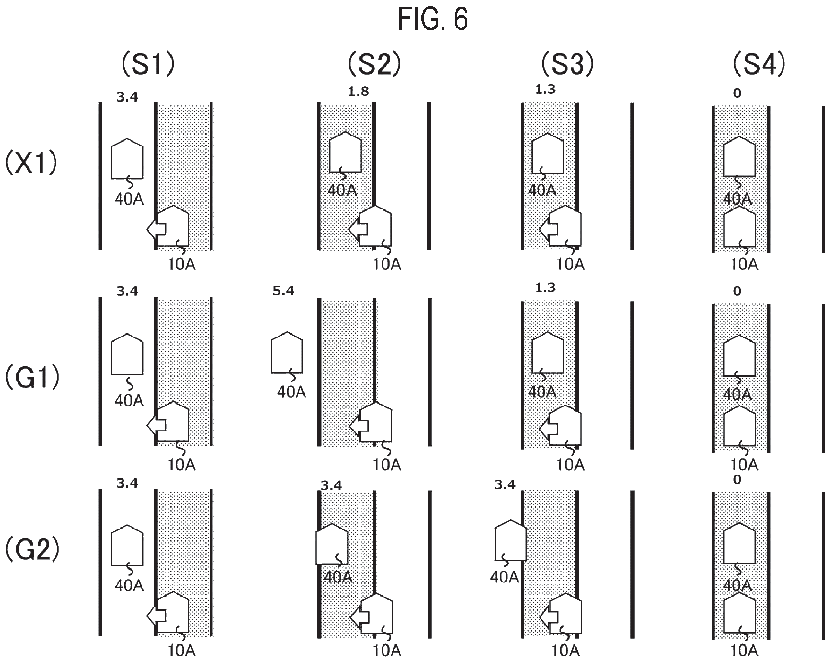

FIG. 6 is a diagram showing an example of a case where the display control is performed at the fixed position. (X1) shows a case where it is assumed that an actual scene can be reflected, (G1) shows a case where the display control at the fixed position is not performed, and (G2) shows a case where the display control at the fixed position is performed. (S1) to (S4) show elapse of time. (S1) is a situation before the lane change occurs, and (S2) is a situation in which the lane change occurs. (S3) and (S4) are situations in which the host vehicle moves to the center of the traveling lane serving as a switching destination after the lane change. In (S1), the lateral position coordinate of the surrounding object is 3.4 m in any display. When the lane change occurs in (S2), in (G1), a lateral position deviates to 5.4 m due to the synchronization deviation, while in (G2), the display position is fixed to 3.4 m of a previous position. As the time elapses, in (G1) of (S3), the display returns to the correct position of 1.3 m, but a display interval is skipped because the display returns from 5.4 m to 1.3 m at once. On the other hand, in (G2), since the release condition is not satisfied yet, the display at the fixed position is continued, and the fixed position of 3.4 m is maintained. In (S4), the release condition of (G2) is satisfied, and the display at the fixed position is released.

As described above, the meter ECU 20 of the present embodiment can reduce the sense of discomfort in the display switching during the lane change.

Note that various processors other than the CPU may execute various types of processing executed by the CPU 21 reading the software (program) in the embodiment described above. Examples of the processor in this case include a programmable logic device (PLD) of which a circuit configuration can be changed after manufacture, such as a field-programmable gate array (FPGA), a graphics processing unit (GPU), and a dedicated electric circuit that is a processor having a circuit configuration specially designed to execute specific processing, such as an application specific integrated circuit (ASIC). In addition, each processing described above may be executed by one of these various processors, and may be executed by a combination of two or more processors of the same type or different types (for example, a plurality of the FPGAs, and a combination of the CPU and the FPGA). In addition, more specifically, the hardware structure of these various processors is an electric circuit in which circuit elements, such as semiconductor elements, are combined.

In addition, in the embodiment, an information processing program has been described in a mode in which the information processing program is stored (installed) in a computer-readable non-transitory recording medium in advance. For example, the information processing program is stored in the ROM 22 or the storage 24 in advance. However, the present disclosure is not limited thereto, and each program may be provided in a form of being recorded in a non-transitory recording medium such as a compact disc read only memory (CD-ROM), a digital versatile disc read only memory (DVD-ROM), and a universal serial bus (USB) memory. In addition, the information processing program may be a form of being downloaded from an external device via a network.

The flow of the processing described in the embodiment is an example, and unneeded steps may be deleted, new steps may be added, or the processing sequence may be altered without departing from the spirit of the invention.

## Claims

1. An information processing apparatus (20) comprising:
a controller (21B) configured to display, based on a traveling lane of a host vehicle (10), a surrounding object (40A) of a surrounding vehicle recognized by the host vehicle (10) together with an image (10A) of the host vehicle (10) and an image (30A) indicating the traveling lane, on a display unit (44),
wherein the controller (21B) is configured to fix, when a difference between a lateral position coordinate of the surrounding object (40A) relative to the host vehicle (10) before a lane change and a lateral position coordinate of the surrounding object (40A) relative to the host vehicle (10) after the lane change is changed to be equal to or larger than a predetermined threshold value, due to switching of the traveling lane of the host vehicle (10), display of the surrounding object (40A) at a fixed position corresponding to the lateral position coordinate before the lane change, and continue the display of the surrounding object (40A) at the fixed position until a release condition related to the fixing is satisfied.

2. The information processing apparatus (20) according to claim 1, wherein:
the release condition includes a condition related to a positional relationship of a lateral position coordinate of the surrounding object (40A) and a condition related to a duration for maintaining the fixed position; and
the controller (21B) is configured to release, when the condition related to the positional relationship or the condition related to the duration is satisfied, the fixing of the display of the surrounding object (40A).

3. The information processing apparatus (20) according to claim 2, wherein when the surrounding object (40A) travels on the traveling lane serving as a switching destination, the controller (21B) is configured to set the condition related to the positional relationship in the release condition as a case where the lateral position coordinate of the surrounding object (40A) is within a predetermined distance from a center line of the host vehicle (10), release the fixed position when the release condition is satisfied, and display the surrounding object (40A) at the lateral position coordinate.

4. The information processing apparatus (20) according to claim 2, wherein when the surrounding object (40A) travels on the traveling lane serving as a switching destination, the controller (21B) is configured to set the condition related to the positional relationship in the release condition as a case where a difference between the lateral position coordinate of the surrounding object (40A) that is detected and the fixed position is within a value corresponding to the threshold value, release the fixed position when the release condition is satisfied, and display the surrounding object (40A) at the lateral position coordinate.

5. The information processing apparatus (20) according to any of claims 2 to 4, wherein the controller (21B) is configured to change the condition related to the duration in the release condition in accordance with traveling states of the host vehicle (10) and the surrounding vehicle.
